# EUROPEAN PATENT APPLICATION

(11) **EP 4 151 685 A1**
(43) Date of publication of application: **22.03.2023**
(21) Application number: 21822180.2
(22) Date of filing: 08.06.2021
(51) Int. Cl.: C08L 67/02, C08L 67/03, C08L 67/04, C08L 71/12, C08L 81/02, C08L 77/00, C08L 77/06, C08L 81/06, C08L 79/08, C23C 28/02, H01Q 1/38, C08K 7/28, C08K 3/36

(54) **PLASTIC FOR ANTENNA ELEMENT**

(30) Priority: 09.06.2020 CN 202010526374
(71) Applicant: Huawei Technologies Co., Ltd., Longgang District, Shenzhen, Guangdong 518129 (CN)
(72) Inventor: LI, Liangyuan, Shenzhen, Guangdong 518129 (CN); ZHANG, Cheng, Shenzhen, Guangdong 518129 (CN); ZHANG, Manrui, Shenzhen, Guangdong 518129 (CN); YANG, Ming, Shenzhen, Guangdong 518129 (CN)
(74) Representative: Isarpatent
(86) International application number: PCT/CN2021/099020
(87) International publication number: WO 2021/249409

(57) **Abstract**

Embodiments of this application provide plastic. With a total of 100 parts by weight, the plastic includes the following components in parts by weight: 25 to 90 parts of matrix resin; 1 to 60 parts of laser reflecting agent; and 0 to 70 parts of inorganic filler, where the inorganic filler is capable of being chemically corroded. When the matrix resin includes a resin component capable of being chemically corroded, parts by weight of the inorganic filler are greater than or equal to 0 parts; or when the matrix resin is fully a resin component incapable of being chemically corroded, parts by weight of the inorganic filler are greater than 0 parts. For the plastic, a low roughness surface can be obtained through chemical roughening, to form a desirable coating binding surface, and help implement metallization. In addition, laser light can be effectively reflected, to reduce carbonization effect on the plastic, and reduce PIM sources from many aspects. The plastic is used for fabricating an antenna element, to obtain a low PIM value. This application further provides an antenna element, an antenna, a terminal device, and a base station that are fabricated by using the plastic.

## Description

This application claims priority to Chinese Patent Application No. 202010526374.2 filed with the China National Intellectual Property Administration on June 9, 2020 and entitled "PLASTIC USED FOR ANTENNA ELEMENT", which is incorporated herein by reference in its entirety.

### TECHNICAL FIELD

This application relates to the field of antenna technologies, and in particular, to plastic used for an antenna element.

### BACKGROUND

An antenna is a device used to transmit or receive electromagnetic waves. A base station antenna for wireless communication generally includes a radome, an antenna radiating element (antenna element), a feeding network (power distribution network), a phase shifter, and a reflecting plate. When at least two radio frequency signals with close frequencies generated by the antenna pass through components such as the antenna radiating element, the feeding network, the phase shifter, and a filter, a new PIM (Passive Intermodulation, passive intermodulation) signal is generated due to factors such as contact nonlinearity and material nonlinearity. When the intermodulation signal falls within a receiving frequency range, interference is caused. This reduces sensitivity of a receiver and even hampers communication. Therefore, a PIM problem of the components needs to be considered in stages of antenna design, component fabrication, and device installation.

An antenna element is an important radio frequency component in a base station antenna. At present, main forms of antenna elements are a die-casting aluminum alloy antenna element, a sheet metal antenna element, a PCB antenna element, a plastic antenna element, and the like. The plastic antenna element generally includes a plastic part that has a structure of an antenna element and that is obtained by performing injection molding on a plastic material and metallic circuits formed on a surface of the plastic part. The metallic circuits generally include a radiating element and a power distribution unit. Due to a light weight, desirable 3D structure formability, low costs, high integration, and other features (an antenna radiating element and a feeding network may be integrated together), the plastic antenna element gradually becomes a main research direction of the antenna element. However, at present, in a process of forming the metallic circuits, there are some processing disadvantages in the existing plastic antenna element, such as excessive surface roughness after roughening of the plastic, unevenness and instability of surface morphology, carbonized plastic particles generated during laser processing, and burrs generated during metallization. All these disadvantages are unstable PIM sources and worsen PIM. When signals at different carrier frequencies are transmitted in the foregoing plastic antenna element with obvious disadvantages, a PIM intermodulation signal is generated. This leads to deterioration in performance of a base station antenna. As a result, it is difficult to apply the existing plastic antenna element to an antenna in an FDD (Frequency division duplex, frequency division duplex) system.

### SUMMARY

Embodiments of this application provide plastic having desirable metallization performance. For the plastic, a low roughness surface can be obtained through chemical roughening, desirable binding can be implemented between a metal coating and a plastic substrate, and a carbonization effect of laser light on the plastic can be reduced or eliminated during laser processing, to effectively reduce PIM sources. The plastic is used for fabricating an antenna element and can obtain a low PIM value.

A first aspect of embodiments of this application provides plastic. With a total of 100 parts by weight, the plastic includes the following components in parts by weight: 25 to 90 parts of matrix resin; 1 to 60 parts of laser reflecting agent; and 0 to 70 parts of inorganic filler, where the inorganic filler is capable of being chemically corroded. When the matrix resin includes a resin component capable of being chemically corroded, parts by weight of the inorganic filler are greater than or equal to 0 parts; or when the matrix resin is fully a resin component incapable of being chemically corroded, parts by weight of the inorganic filler are greater than 0 parts. In a plastic formulation of this embodiment of this application, the matrix resin capable of being chemically corroded or the inorganic filler capable of being chemically corroded is selected, so that a surface with low surface roughness and desirable morphology consistency can be obtained for the plastic through chemical roughening, thereby reducing PIM sources. In addition, a plurality of tiny corrosion hole structures can be formed on the surface of the plastic, so that binding force of a coating on the surface of the plastic is increased. During laser processing, adding the laser reflecting agent can effectively reduce or eliminate a carbonization effect of laser light on the plastic, avoid formation of carbonized particles, and reduce formation of burrs at an edge of the metal coating, thereby further improving PIM. The plastic can be applied to radio frequency components such as an antenna element to fabricate an antenna element having a low PIM value.

In an implementation of this application, the matrix resin includes first matrix resin. The first matrix resin includes one or more of thermotropic liquid crystal polyester (LCP), polyphenylene sulfide (PPS), polyphenylene oxide (PPO), polyethylene terephthalate (PET), polybutylene terephthalate (PBT), poly(1,4-cyclohexylenedimethylene terephthalate) (PCT), polyamide resin, polysulfone resin, polyketone resin, and polyetherimide. The polyamide resin may include one or more of nylon 6, nylon 66, nylon 610, nylon 612, nylon 46, nylon 4T, nylon 6T, nylon 9T, and nylon 10T. The polysulfone resin may include polysulfone, polyethersulfone, and polyarylsulfone. The polyketone resin may include polyether ketone, polyether ether ketone, and polyaryletherketone. In this implementation of this application, parts by weight of the first matrix resin are 25 to 90 parts. In some implementations of this application, the parts by weight of the first matrix resin are 30 to 80 parts. The first matrix resin has desirable heat resistance and mechanical properties and a low dielectric loss. Main body resin of the first matrix resin is conducive to fabricating an antenna element product with a high operating temperature, high mechanical strength, and high dielectric properties. Some resin of the first matrix resin such as the thermotropic liquid crystal polyester, the polyphenylene oxide, the polyethylene terephthalate, the polybutylene terephthalate, the poly(1,4-cyclohexylenedimethylene terephthalate), and the polyamide resin are capable of being chemically corroded, and are conducive to chemical roughening to form the surface with corrosion holes, so that the binding force of the metal coating on the surface is increased. A suitable content of the first matrix resin can effectively improve comprehensive performance of the plastic.

In another implementation of this application, the matrix resin further includes second matrix resin, that is, the matrix resin includes both the first matrix resin and the second matrix resin. The second matrix resin includes one or more of thermotropic liquid crystal polyester, polyphenylene oxide, poly(1,4-cyclohexylenedimethylene terephthalate), polyethylene terephthalate, polybutylene terephthalate, polyamide resin, an acrylonitrile-butadiene-styrene copolymer (ABS), a methyl methacrylate-butadiene-styrene copolymer (MBS), ABS high rubber powder, a methyl methacrylate-butadiene copolymer (MB), an acrylate copolymer (ACR), an ethylene-butyl acrylate-glycidyl methacrylate copolymer (PTW), an ethylene-methyl acrylate-glycidyl methacrylate copolymer (E-MA-GMA), polybutadiene (PB), a butadiene-styrene copolymer (BS), a hydrogenated styrene-butadiene-styrene copolymer (SEBS), a styrene-butadiene-styrene copolymer (SBS), a butadiene-acrylonitrile copolymer, butyl rubber, polysoprene rubber, an ethylene-octene copolymer, and ethylene propylene diene monomer rubber, and the second matrix resin is different from the first matrix resin. In this implementation of this application, parts by weight of the second matrix resin are 1 to 25 parts. The second matrix resin can be added as secondary component resin to make up a performance disadvantage of the first matrix resin and improve performance of an ultimate plastic product, for example, electroplating performance and strength performance. In addition, the entire second matrix resin is capable of being chemically corroded, thereby facilitating chemical roughening.

In this implementation of this application, to obtain a corrosion surface with diversified corrosion structures and increase the binding force of the coating on the surface of the plastic, when the parts by weight of the inorganic filler are equal to 0 parts, the matrix resin includes two or more resin components capable of being chemically corroded. Corrosion effects of different types of resin are different, and therefore the corrosion surface that is more favorable to increasing the binding force of the coating can be obtained through chemical roughening.

In this implementation of this application, to obtain a desirable corrosion surface and increase the binding force of the coating on the surface of the plastic, when the parts by weight of the inorganic filler are equal to 0 parts, the matrix resin includes a resin component with at least 10 parts by weight capable of being chemically corroded.

In this implementation of this application, the thermotropic liquid crystal polyester, the polyphenylene oxide, the poly(1,4-cyclohexylenedimethylene terephthalate), the polyethylene terephthalate, the polybutylene terephthalate, the polyamide resin, the acrylonitrile-butadiene-styrene copolymer, the methyl methacrylate-butadiene-styrene copolymer, the ABS high rubber powder, the methyl methacrylate-butadiene copolymer, the acrylate copolymer, the ethylene-butyl acrylate-glycidyl methacrylate copolymer, the ethylene-methyl acrylate-glycidyl methacrylate copolymer, the polybutadiene, the butadiene-styrene copolymer, the hydrogenated styrene-butadiene-styrene copolymer, the styrene-butadiene-styrene copolymer, the butadiene-acrylonitrile copolymer, the butyl rubber, the polysoprene rubber, the ethylene-octene copolymer, and the ethylene propylene diene monomer rubber are all resin components capable of being chemically corroded. The polyphenylene sulfide, the polysulfone resin, the polyketone resin, and the polyetherimide are resin components incapable of being chemically corroded.

In this implementation of this application, to obtain a plastic product with a high operating temperature, a resin material having a glass-transition temperature or a melting point greater than 160°C may be selected for the matrix resin. To obtain a plastic product with performance of a low dielectric loss, a resin material having a dielectric loss less than 0.015 at 700 MHz to 6 GHz may be selected for the matrix resin.

In this implementation of this application, the laser reflecting agent includes one or more of titanium dioxide powder, zinc oxide powder, zinc sulfide powder, calcium titanate powder, barium sulfate powder, iron oxide powder, talcum powder, mica powder, and ABO₃ powder. In the ABO₃ powder, A is Ba, Sr, Pb, or BaₓSr_{y}, and B is Ti, Zr, or TiₓZr_{y}, where x+y=1. In some implementations of this application, parts by weight of the laser reflecting agent are 5 to 40 parts. Because the laser reflecting agent can effectively reflect laser light and reflectivity to the laser light is greater than or equal to 70%, a carbonization effect of the laser light on the matrix resin in the plastic can be eliminated during laser processing, so that a PIM effect of nonlinear carbonized particles is reduced or eliminated.

In this implementation of this application, the inorganic filler includes one or more of a silica particle and a glass fiber. The two types of inorganic filler are capable of being corroded by chemical corrosion solution in a desirable manner, so that corrosion holes with different morphology structures are formed on the surface of the plastic.

In this implementation of this application, a D50 particle size of the silica particle is within 1 µm to 5 µm. In this implementation of this application, a cross-sectional diameter or thickness of the glass fiber is less than or equal to 15 µm. The silica particle and the glass fiber of suitable sizes are conducive to forming corrosion holes of suitable sizes and depths on the surface of the plastic during chemical roughening of the plastic. This ensures low roughness and improves PIM, and enables a specific quantity of metal coating materials to be embedded into the plastic, to provide the binding force of the coating.

In this implementation of this application, for better chemical corrosion to form corrosion holes, a content of silica in the glass fiber is greater than or equal to 50%.

In some implementations of this application, the parts by weight of the inorganic filler may be 10 to 60 parts. Adding a large amount of inorganic filler enables more corrosion holes to be formed on the surface of the plastic, so that the binding force of the coating on the surface is increased.

In this implementation of this application, the plastic does not include a component capable of being activated by laser light to release metal particles. The plastic in this embodiment of this application does not include an organometallic compound with high costs in existing LDS plastic, and costs of a raw material are low. In addition, laser ablation does not need to be performed to obtain all circuits, and electroless plating and electroplating can be directly performed through chemical roughening to form the metal coating. This can reduce a laser processing amount, and is applicable to large-area circuit fabrication.

In this implementation of this application, to improve dielectric properties of the plastic, the plastic further includes a dielectric modifier. The dielectric modifier includes one or more of titanium dioxide, barium titanate, calcium titanate, strontium titanate, barium strontium titanate, lead titanate, lead zirconate, lead zirconate titanate, potassium tantalate niobate, and zinc oxide. In this implementation of this application, parts by weight of the dielectric modifier are less than or equal to 40 parts. Adding a suitable quantity of dielectric modifiers can effectively improve the dielectric properties of the plastic, without degrading other performance of the plastic.

In this implementation of this application, to obtain plastic products with different performance so as to be applicable to requirements of different application scenarios, the plastic may further include one or more of a lubricant, a compatibilizer, a flame retardant, and an antimicrobial agent.

In this implementation of this application, a long-term tolerance operating temperature of the plastic is greater than 110°C, and tensile strength of the plastic is greater than or equal to 40 MPa. In this implementation of this application, a dielectric loss of the plastic at 700 MHz to 6 GHz is less than 0.015. High heat resistance, strength performance, and dielectric properties can broaden application scenarios of the plastic.

In this implementation of this application, an average value of third-order PIM of an antenna element fabricated by using the plastic at 700 MHz to 6 GHz is less than or equal to -100 dBm.

In the plastic provided in this embodiment of this application, through a synergistic effect of the foregoing components, a surface with low roughness (Ra<6 µm) and even and consistent surface morphology can be obtained through chemical roughening, and a carbonization phenomenon of the matrix resin is not caused in a process of removing the metal coating by using laser light, so that a low PIM value can be obtained. In addition, corrosion holes can be formed on the surface of the plastic during chemical roughening to increase the binding force of the coating on the surface. The plastic has desirable metallization performance, and therefore the plastic can be applied to various scenarios in which metallized plastic structures have low PIM requirements. The plastic in this embodiment of this application can be used for fabricating an antenna element and is applied to base station antennas in all frequency bands with desirable PIM values, including third-order and fifth-order PIM. The plastic can also be applied to other radio frequency components with desirable PIM values, such as a filter, a waveguide, and a connector.

A second aspect of embodiments of this application provides a plastic part having a metal coating, including a plastic part body and a metal coating formed on a surface of the plastic part body. The plastic part body is obtained by performing injection molding on the plastic according to the first aspect of embodiments of this application. Specifically, the plastic part body is an integral injection molding part. The metal coating is fabricated through electroless plating and/or electroplating.

A third aspect of embodiments of this application provides an antenna element. The antenna element includes an antenna element body and a metal coating formed on a surface of the antenna element body. The antenna element body is obtained by performing injection molding on the plastic according to the first aspect of embodiments of this application. The metal coating is fabricated through electroless plating and/or electroplating.

In this implementation of this application, the metal coating includes an electroless plated layer and an electroplated coating that are sequentially formed on the surface of the antenna element body, the electroless plated layer includes copper and/or nickel, and the electroplated coating includes one or more of copper, tin, silver, gold, and copper-zinc-tin alloy.

In this implementation of this application, a surface of one side that is of the antenna element body and that is bonded to the metal coating has a plurality of corrosion hole structures, and a metal coating material is deposited in the plurality of corrosion hole structures. Because part of the metal coating material is deposited in the corrosion hole structures, a riveting effect is formed between the metal coating and a plastic substrate, thereby achieving desirable binding force between the metal coating and the plastic substrate. In this implementation of this application, a cross-cut test is used for the metal coating, and binding force is at least a grade 0 for a 3M #600 tape.

In this implementation of this application, surface roughness Ra of the surface of one side that is of the antenna element body and that is bonded to the metal coating is less than 6 µm. A low roughness surface can effectively reduce a PIM value of the antenna element.

In this implementation of this application, an average value of third-order PIM of the antenna element at 700 MHz to 6 GHz is less than or equal to -100 dBm.

A fourth aspect of embodiments of this application provides an antenna, including the antenna element according to the third aspect of embodiments of this application.

An embodiment of this application further provides a terminal device. The terminal device includes the antenna according to the fourth aspect of embodiments of this application.

An embodiment of this application further provides a base station. The base station includes the antenna according to the fourth aspect of embodiments of this application.

In the plastic provided in embodiments of this application, the matrix resin capable of being chemically corroded or the inorganic filler capable of being chemically corroded is selected, so that the surface with low surface roughness and desirable morphology consistency can be obtained for the plastic through chemical roughening, thereby reducing PIM sources. In addition, in the chemical roughening process, the organic or inorganic material capable of being chemically corroded at a surface layer of the plastic is corroded by chemical corrosion solution to form a plurality of tiny corrosion hole structures. When the metal coating is formed on a surface of the plastic substrate, part of the metal coating material is deposited in these tiny corrosion hole structures, to form a riveting effect, thereby achieving desirable binding force between the metal coating and the plastic substrate. Moreover, the laser reflecting agent is added. Because the laser reflecting agent has strong reflectivity to laser light, during laser processing, when the laser processing is performed on a plastic interface and the metal coating, the carbonization effect of the laser light on the plastic can be effectively reduced or eliminated, formation of carbonized particles can be avoided, and formation of burrs at the edge of the metal coating can be reduced, so that a PIM problem is effectively alleviated. The antenna element fabricated by using the plastic can be applied to an FDD antenna with a desirable PIM value, and can also be applied to a TDD (Time division duplex, time division duplex) antenna to obtain an antenna gain by reducing surface roughness of the metal coating.

### BRIEF DESCRIPTION OF DRAWINGS

FIG. 1 is a schematic diagram of a cross-sectional structure of an antenna element according to an embodiment of this application;
FIG. 2 is a schematic diagram of a structure of an antenna element according to an embodiment of this application;
FIG. 3 is a schematic diagram of a structure of an antenna element according to another embodiment of this application; and
FIG. 4 is a flowchart of a fabrication process of an antenna element according to an embodiment of this application.

### DESCRIPTION OF EMBODIMENTS

The following describes embodiments of this application with reference to the accompanying drawings in embodiments of this application.

At present, a production process of a plastic antenna element mainly includes an LDS (Laser-Direct-Structuring, laser direct structuring) process and a PEP (Partially-Electroplating-Process, partial electroplating processing) process. In the LDS process, a plastic substrate is directly irradiated with laser light, the plastic substrate in a laser irradiation region is enabled to perform activation to release metal particles, and metallization is implemented by performing electroless plating in the region to form a metal coating, thereby completing arrangement of metallic circuit. In the LDS process, the plastic substrate generates nonlinear carbonized particles in a laser ablation process, and surface roughness of a surface after laser ablation is usually high, and stability of surface morphology is poor. Consequently, PIM is undesirable and the LDS process cannot be applied to an FDD antenna. In addition, the plastic substrate in this process needs to include an organometallic compound capable of being activated by laser light to release metal particles, and costs of a raw material are high. Moreover, when a circuit region in the antenna element is large, a laser processing amount of the process is large, leading to a problem of high laser processing costs of the plastic antenna element. In the PEP process, engineering plastic injection molding is used to obtain a plastic part that has a structure of an antenna element; physical sandblasting roughening is performed; a metal plated layer is deposited on a surface of a roughened plastic part by using an electroless plating method; and a circuit region is isolated from a non-circuit region by performing laser ablation on a surface of the plated layer, where the circuit region is thickened through electroplating, and deplating is performed in the non-circuit region to remove the plated layer, to obtain a plastic antenna element with circuit characteristics. In the PEP process, the physical sandblasting process is used to roughen a plastic substrate, surface roughness after roughening is high, surface morphology consistency and stability are poor. Consequently, PIM is undesirable and the PEP process cannot be applied to an FDD antenna either. In addition, when laser processing is performed on a plastic interface and a metal coating, because the plastic substrate in a laser processing region is carbonized due to absorption of laser light by the plastic substrate, and metal burrs are easily formed at an edge due to conductivity of carbonized particles during electroplating. This causes deterioration in the PIM.

To resolve a problem that the existing plastic antenna element cannot be applied to an antenna in an FDD system due to a PIM problem, an embodiment of this application provides plastic having a low PIM effect. An antenna element fabricated by using the plastic has a low PIM value, and a metal coating on a surface of the plastic has large binding force. Therefore, the plastic can be applied to an antenna in the FDD system, and has low costs of a raw material and a process.

With a total of 100 parts by weight, the plastic provided in this embodiment of this application includes the following components in parts by weight:
25 to 90 parts of matrix resin;
1 to 60 parts of laser reflecting agent; and
0 to 70 parts of inorganic filler, where the inorganic filler is capable of being chemically corroded.

In this implementation of this application, to form a surface with low surface roughness, desirable morphology consistency, and a large quantity of corrosion hole structures through chemical roughening, when the matrix resin includes a resin component capable of being chemically corroded, parts by weight of the inorganic filler may be greater than or equal to 0 parts; or when the matrix resin is fully a resin component incapable of being chemically corroded, that is, the matrix resin does not include a resin component capable of being chemically corroded, parts by weight of the inorganic filler are greater than 0 parts.

In some implementations of this application, parts by weight of the matrix resin may be 30 to 80 parts. In some implementations of this application, the parts by weight of the matrix resin may be 35 to 70 parts.

In an implementation of this application, the matrix resin includes first matrix resin. The first matrix resin includes one or more of thermotropic liquid crystal polyester, polyphenylene sulfide, polyphenylene oxide, polyethylene terephthalate, polybutylene terephthalate, poly(1,4-cyclohexylenedimethylene terephthalate), polyamide resin, polysulfone resin, polyketone resin, and polyetherimide. The polyamide resin may include one or more of nylon 6, nylon 66, nylon 610, nylon 612, nylon 46, nylon 4T, nylon 6T, nylon 9T, and nylon 10T. The polysulfone resin may include polysulfone, polyethersulfone, and polyarylsulfone. The polyketone resin may include polyether ketone, polyether ether ketone, and polyaryletherketone. These types of resin each have excellent high-temperature resistance and specific strength. The thermotropic liquid crystal polyester, the polyphenylene oxide, the polyethylene terephthalate, the polybutylene terephthalate, the poly(1,4-cyclohexylenedimethylene terephthalate), and the polyamide resin are capable of being chemically corroded, and are conducive to chemical roughening to form corrosion holes. In this implementation of this application, when the first matrix resin includes the thermotropic liquid crystal polyester, the polyphenylene oxide, the polyethylene terephthalate, the polybutylene terephthalate, the poly(1,4-cyclohexylenedimethylene terephthalate), and the polyamide resin, those of which are capable of being chemically corroded, the inorganic filler capable of being chemically corroded does not need to be added, that is, the parts by weight of the inorganic filler are 0 parts. In this way, the first matrix resin can be corroded to form a roughened surface, so that the metal coating with large binding force is formed on the surface of the plastic. Certainly, to increase the binding force of the coating, the inorganic filler may be further added, that is, the parts by weight of the inorganic filler are greater than 0 parts. The polyphenylene sulfide, the polysulfone resin, the polyketone resin, and the polyetherimide are incapable of being chemically corroded. If the matrix resin includes only these types of resin, the inorganic filler capable of being chemically corroded needs to be added, that is, the parts by weight of the inorganic filler are greater than 0 parts. In some implementations of this application, parts by weight of the first matrix resin may be 25 to 90 parts. In some other implementations of this application, the parts by weight of the first matrix resin may be 30 to 80 parts. In still some other implementations of this application, the parts by weight of the first matrix resin may be alternatively 35 to 70 parts. A suitable content of the first matrix resin can effectively increase mechanical strength of the plastic and the binding force of the coating.

In another implementation of this application, the matrix resin may include both the first matrix resin and second matrix resin. The second matrix resin includes but is not limited to one or more of thermotropic liquid crystal polyester, polyphenylene oxide, polyphenylene sulfide, poly(1,4-cyclohexylenedimethylene terephthalate), polyethylene terephthalate, polybutylene terephthalate, polyamide resin, an acrylonitrile-butadiene-styrene copolymer, a methyl methacrylate-butadiene-styrene copolymer, ABS high rubber powder, a methyl methacrylate-butadiene copolymer, an acrylate copolymer, an ethylene-butyl acrylate-glycidyl methacrylate copolymer, an ethylene-methyl acrylate-glycidyl methacrylate copolymer, polybutadiene, a butadiene-styrene copolymer, a hydrogenated styrene-butadiene-styrene copolymer, a styrene-butadiene-styrene copolymer, a butadiene-acrylonitrile copolymer, butyl rubber, polysoprene rubber, an ethylene-octene copolymer, and ethylene propylene diene monomer rubber. In this implementation, the second matrix resin and the first matrix resin are different resin. In some implementations of this application, parts by weight of the second matrix resin may be 1 to 25 parts, and the parts by weight of the first matrix resin may be 25 to 89 parts. In some other implementations of this application, the parts by weight of the second matrix resin may be 2 to 20 parts. In still some other implementations of this application, the parts by weight of the second matrix resin may be 5 to 15 parts.

The second matrix resin can be added as secondary component resin to make up a performance disadvantage of the first matrix resin and improve performance of an ultimate plastic product, for example, electroplating performance and strength performance. In addition, the entire second matrix resin is capable of being chemically corroded, thereby facilitating chemical roughening. Specifically, in this implementation of this application, the thermotropic liquid crystal polyester, the polyphenylene oxide, the poly(1,4-cyclohexylenedimethylene terephthalate), the polyethylene terephthalate, the polybutylene terephthalate, the polyamide resin, the acrylonitrile-butadiene-styrene copolymer, the methyl methacrylate-butadiene-styrene copolymer, the ABS high rubber powder, the methyl methacrylate-butadiene copolymer, the acrylate copolymer, the ethylene-butyl acrylate-glycidyl methacrylate copolymer, the ethylene-methyl acrylate-glycidyl methacrylate copolymer, the polybutadiene, the butadiene-styrene copolymer, the hydrogenated styrene-butadiene-styrene copolymer, the styrene-butadiene-styrene copolymer, the butadiene-acrylonitrile copolymer, the butyl rubber, the polysoprene rubber, the ethylene-octene copolymer, and the ethylene propylene diene monomer rubber are all resin components capable of being chemically corroded. They are capable of being corroded by chemical corrosion solution, so that a roughened surface with low roughness is formed on the plastic. In this implementation of this application, when the first matrix resin and/or the second matrix resin include/includes the foregoing resin capable of being chemically corroded, the inorganic filler capable of being chemically corroded does not need to be added, that is, the parts by weight of the inorganic filler are 0 parts. In this way, the first matrix resin and/or the second matrix resin can be corroded to form a roughened surface, so that the metal coating with large binding force is formed on the surface of the plastic. Certainly, to increase the binding force of the coating on the surface, the inorganic filler may be further added, that is, the parts by weight of the inorganic filler are greater than 0 parts. The polyphenylene sulfide, the polysulfone resin, the polyketone resin, and the polyetherimide are incapable of being chemically corroded. If the matrix resin includes only these types of resin, the inorganic filler capable of being chemically corroded needs to be added, that is, the parts by weight of the inorganic filler are greater than 0 parts.

In this implementation of this application, when the matrix resin includes two or more resin components capable of being chemically corroded, the parts by weight of the inorganic filler may be 0 parts. The two or more resin components capable of being chemically corroded may be resin components selected from the first matrix resin, or may be resin components selected from the first matrix resin and the second matrix resin. By selecting the two or more resin components capable of being chemically corroded, diversified corrosion structures on the surface of the plastic can be obtained through chemical roughening, thereby increasing the binding force of the metal coating. Certainly, to further increase the binding force of the coating on the surface, the inorganic filler may be further added, that is, the parts by weight of the inorganic filler are greater than 0 parts. To be specific, when the matrix resin includes the two or more resin components capable of being chemically corroded, the parts by weight of the inorganic filler may be 0 to 70 parts. When the matrix resin includes only one resin component capable of being chemically corroded or the matrix resin is fully a resin component incapable of being chemically corroded, the parts by weight of the inorganic filler are greater than 0 parts and less than or equal to 70 parts.

In this implementation of this application, "capable of being chemically corroded" means capable of being corroded and removed by chemical corrosion solution, so that a surface with specific roughness and corrosion hole structures is formed on the plastic. The chemical corrosion solution may include acid corrosion solution, alkaline corrosion solution, and the like. It can be understood that the chemical corrosion solution may be selected from different corrosion solution systems based on specific properties of the matrix resin and the inorganic filler.

In this implementation of this application, to obtain a desirable corrosion surface and increase the binding force of the coating on the surface of the plastic, when the parts by weight of the inorganic filler are equal to 0 parts, the matrix resin includes a resin component with at least 10 parts by weight capable of being chemically corroded. Alternatively, when the parts by weight of the inorganic filler are equal to 0 parts, the matrix resin includes a resin component with at least 15 parts by weight capable of being chemically corroded. In some implementations of this application, the matrix resin may alternatively include a resin component with at least 20 parts by weight capable of being chemically corroded. In some implementations of this application, the matrix resin may alternatively include a resin component with at least 30 parts by weight capable of being chemically corroded.

In this implementation of this application, to obtain a plastic product with a high operating temperature, a resin material having a glass-transition temperature or a melting point greater than 160°C may be selected for the matrix resin. In some other implementations of this application, a resin material having a glass-transition temperature or a melting point greater than 200°C may be alternatively selected for the matrix resin. In some other implementations of this application, a resin material having a glass-transition temperature or a melting point greater than 230°C may be alternatively selected for the matrix resin. To obtain a plastic product with performance of a low dielectric loss, a resin material having a dielectric loss less than 0.015 at 700 MHz to 6 GHz may be selected for the matrix resin. In still some other implementations of this application, a resin material having a dielectric loss less than 0.01 at 700 MHz to 6 GHz may be selected for the matrix resin.

In this implementation of this application, the laser reflecting agent is added. Because the laser reflecting agent has strong reflectivity to laser light, a carbonization effect of the laser light on the matrix resin in the plastic can be effectively reduced or eliminated during laser processing, so that a PIM effect of nonlinear carbonized particles is reduced or eliminated. Specifically, in this implementation of this application, reflectivity of the laser reflecting agent to the laser light may be greater than or equal to 70%. The laser reflecting agent may specifically include one or more of titanium dioxide powder, zinc sulfide powder, calcium titanate powder, barium sulfate powder, iron oxide powder, talcum powder, mica powder, and ABO₃ powder. In the ABO₃ powder, A is Ba, Sr, Pb, or BaₓSr_{y}, and B is Ti, Zr, or TiₓZr_{y}, where x+y=1. A particle size of powder of the laser reflecting agent may be less than or equal to 15 µm. In some implementations of this application, parts by weight of the laser reflecting agent may be 5 to 40 parts. In some other implementations of this application, the parts by weight of the laser reflecting agent may be 10 to 35 parts. In still some other implementations of this application, the parts by weight of the laser reflecting agent may be alternatively 20 to 30 parts.

In this implementation of this application, the inorganic filler can be corroded and removed by the chemical corrosion solution, so that a low roughness surface can be formed on the plastic through chemical roughening. In the chemical roughening process, the surface of the plastic is corroded by the chemical corrosion solution to form a plurality of corrosion hole structures with a plurality of openings. When electroless plating or electroplating is subsequently performed to form the metal coating on the surface of the plastic, a metallic material penetrates into these opening structures to produce desirable binding force of the coating. In addition, chemical roughening is more stable and even than physical roughening, and can be performed to form a low roughness surface, to obtain a roughened surface with better and more stable surface morphology consistency. Shapes and sizes of the corrosion hole structures can be controlled by selecting a shape and a size of the inorganic filler, to controllably adjust surface morphology of the plastic. Most of the corrosion hole structures are micron-scale hole structures. Moreover, the inorganic filler can also effectively increase strength of the plastic. Formation of the corrosion hole structures can obtain better binding force of the metal coating in a better manner while maintaining a low roughness surface.

In this implementation of this application, the inorganic filler may be specifically one or more of a silica particle and a glass fiber. In this implementation of this application, the silica particle is of a microsphere structure and a D50 particle size of the silica particle is within 1 µm to 5 µm. Specifically, the D50 particle size may be, for example, 1 µm, 2 µm, 3 µm, 4 µm, or 5 µm. Silica with a small particle size can be better dispersed in the matrix resin, and enables more even tiny holes with suitable sizes to be formed on the surface of the plastic during chemical roughening. This increases the binding force of the metal coating, can avoid impact of an excessive particle size on mechanical properties, and can avoid a problem of deterioration in PIM caused by high roughness resulting from an excessive particle size. In this implementation of this application, a cross-sectional shape of the glass fiber may be circular or rectangular, and certainly may alternatively have other regular or irregular properties. A cross-sectional diameter or thickness of the glass fiber may be less than or equal to 15 µm, and may be specifically, for example, within 1 µm to 15 µm. Specifically, a cross-sectional diameter of a circular glass fiber may be less than or equal to 15 µm, and a cross-sectional thickness of a flat glass fiber (rectangular glass fiber) may be less than or equal to 10 µm. Adding the glass fiber of a suitable size can form corrosion holes of suitable depths. This achieves low Rz for the roughened surface, improves PIM, and can ensure the mechanical properties of the material.

In this implementation of this application, for better chemical corrosion to form corrosion holes, a content of silica in the glass fiber is greater than or equal to 50%. Specifically, in this implementation of this application, the content of the silica in the glass fiber may be 60%, 70%, 80%, or 90%. In some implementations of this application, the glass fiber is an alkali-free glass fiber. The alkali-free glass fiber has high strength and a low loss, and does not cause degradation of resin during processing. In some implementations of this application, to form diversified corrosion holes of various shapes and sizes on the surface of the plastic and increase the binding force of the coating, both the silica particle and the glass fiber may be added.

In some implementations of this application, the parts by weight of the inorganic filler may be 10 to 60 parts. In some other implementations of this application, the parts by weight of the inorganic filler may be 20 to 50 parts. In still some other implementations of this application, the parts by weight of the inorganic filler may be alternatively 25 to 40 parts. Specifically, an addition amount of the inorganic filler may be adjusted and controlled based on corrosivity of the matrix resin. When the matrix resin is capable of being chemically corroded, the addition amount of the inorganic filler may be reduced. When the matrix resin is incapable of being chemically corroded, the addition amount of the inorganic filler may be increased.

In this implementation of this application, the plastic does not include a component capable of being activated by laser light to release metal particles. The component capable of being activated by laser light to release metal particles specifically includes an organometallic compound. The plastic in this embodiment of this application does not include an organometallic compound with high costs in existing LDS plastic, and costs of a raw material are low. In addition, laser ablation does not need to be performed to obtain all circuits, and electroless plating and electroplating can be directly performed through chemical roughening to form the metal coating. This can reduce a laser processing amount, and is applicable to large-area circuit fabrication.

In this implementation of this application, to further improve dielectric properties of the plastic, the plastic further includes a dielectric modifier. The dielectric modifier includes but is not limited to one or more of titanium dioxide, barium titanate, calcium titanate, strontium titanate, barium strontium titanate, lead titanate, lead zirconate, lead zirconate titanate, potassium tantalate niobate, and zinc oxide. In this implementation of this application, parts by weight of the dielectric modifier are less than or equal to 40 parts, and may be specifically, for example, 1 to 40 parts. Further, the parts by weight of the dielectric modifier may be less than or equal to 30 parts. Further, the parts by weight of the dielectric modifier may be less than or equal to 20 parts. By using the dielectric modifier with a high dielectric constant, a series of plastic with different dielectric constants can be developed. A higher dielectric constant and mechanical strength are obtained when an addition amount is small, thereby meeting requirements of miniaturization and high isolation of the antenna element.

In this implementation of this application, to obtain plastic products with different performance so as to be applicable to requirements of different application scenarios, other additives may be added to the plastic depending on an application requirement. The other additives may specifically include but are not limited to one or more of a lubricant, a compatibilizer, a flame retardant, and an antimicrobial agent.

In this implementation of this application, to further improve evenness and a plastification effect of material particle blanking during injection molding processing, the plastic further includes the lubricant. The lubricant may include but is not limited to one or more of a fluorine-containing lubricant, a silicon-containing lubricant, polypropylene wax, modified polypropylene wax, polyethylene wax, modified polyethylene wax, modified polyethylene, an ethylene propylene copolymer, stearic acid ester, stearic acid, and a stearate salts lubricant. In this implementation of this application, to further improve the mechanical properties of the material and improve the mechanical strength, the plastic further includes the compatibilizer. The compatibilizer may include but is not limited to one or more of a maleic anhydride graft, a maleic anhydride copolymer, an acrylic acid-modified polymer, and an epoxy-modified polymer. In this implementation of this application, to further improve flame retardance of the material, the plastic may further include the flame retardant. The flame retardant may include one or more of a phosphorus flame retardant, a nitrogen flame retardant, and an organohalogen flame retardant. Plastic with different flame retardance can be fabricated by adding flame retardants of different types and different content, to meet flame retardant requirements in different scenarios. In this implementation of this application, to further improve antimicrobial properties of the material, the plastic may further include the antimicrobial agent. The antimicrobial agent may specifically include but is not limited to a silver ion antimicrobial agent, nano titanium dioxide, an ammonium salt antimicrobial agent, a quaternary phosphonium salt bactericide, and an organotin fungicide. Plastic with different antimicrobial grades can be developed by adding the antimicrobial agent, to meet different antimicrobial requirements when used outdoors.

The plastic provided in this embodiment of this application has excellent comprehensive performance such as high-temperature resistance, a low PIM value, a low dielectric loss, low costs, and high strength through a synergistic effect of the foregoing components, and is applicable to various application scenarios. In this implementation of this application, the plastic has a high heat-resistant temperature, and can meet an SMT (Surface Mounted Technology, surface mount technology) soldering requirement and a soldering-iron welding requirement within 260°C. A tolerance operating temperature of the plastic, namely, a long-term service temperature, is greater than 110°C. Tensile strength of the plastic is greater than or equal to 40 MPa. In this implementation of this application, a dielectric loss of the plastic at 700 MHz to 6 GHz is less than 0.015. In this implementation of this application, an average value of third-order PIM of the antenna element fabricated by using the plastic at 700 MHz to 6 GHz is less than or equal to -100 dBm, and is applicable to an FDD antenna. Application of the plastic to the antenna can also improve isolation of the antenna element and implement miniaturization of the antenna element.

In this implementation of this application, the plastic may be fabricated in the following manner:

The matrix resin is dried in advance; dried matrix resin is evenly mixed by using a high-speed mixer; and after evenly mixed matrix resin is evenly mixed with the laser reflecting agent and the inorganic filler, an obtained mixture is put into a main feed hopper of a twin screw extruder. If the glass fiber is added, the glass fiber is added from a side feed hopper of the extruder, extrusion and granulation are performed after melt blending, that is, the plastic in this embodiment of this application is obtained.

An embodiment of this application further provides a plastic part having a metal coating, including a plastic part body and a metal coating formed on a surface of the plastic part body. The plastic part body is obtained by performing injection molding on the foregoing plastic, and the metal coating may be fabricated through electroless plating and/or electroplating. Specifically, the plastic part body is an integral injection molding part. The plastic part having the metal coating may be a structural part in various plastic application scenarios with metallization requirements. The application scenarios include but are not limited to an antenna element, a filter, a waveguide, and a connector.

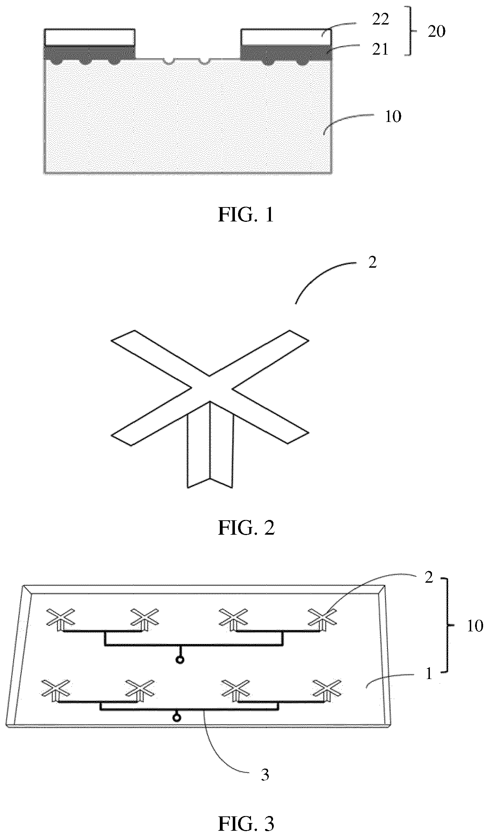

FIG. 1 is a schematic diagram of a cross-sectional structure of an antenna element according to an embodiment of this application. The antenna element includes an antenna element body 10 and a metal coating 20 formed on a surface of the antenna element body 10. The antenna element body 10 is obtained by performing injection molding on the foregoing plastic in embodiments of this application. Specifically, the antenna element body 10 is an integral injection molding part. The metal coating 20 may be fabricated through electroless plating and/or electroplating, and the metal coating 20 may include various metallic circuits, reflection components, and the like that need to be designed in a structure of the antenna element.

In this implementation of this application, none of a specific structure, shape, and size of the antenna element body 10 is limited, and the antenna element body 10 may be injection molded into any form depending on an actual product requirement. As shown in FIG. 2, the antenna element body 10 may be a single antenna element structure 2. As shown in FIG. 3, the antenna element body 10 may be alternatively an integral plastic part in which a plurality of single antenna element structures 2 are integrated, that is, the antenna element body 10 includes a plastic base plate 1 and one or more single antenna element structures 2 integrated on the plastic base plate 1. A quantity of integrated antenna element structures 2 is not limited, and may be set depending on a requirement. The plurality of single antenna element structures 2 may be arranged in arrays. The metal coating 20 formed on the antenna element body 10 may include metallic circuits such as a radiating element and a power distribution unit 3, and may also include a metal layer that acts as a reflection component having a reflection effect. The radiating element may be formed on the antenna element structure 2, the power distribution unit 3 may be formed on a surface of any side of the plastic base plate 1, and the metal layer that acts as the reflection component having a reflection effect may be formed on a surface of the plastic base plate 1.

In this implementation of this application, as shown in FIG. 1, the metal coating 20 may include an electroless plated layer 21 and an electroplated coating 22 that are sequentially formed on the surface of the antenna element body 10, the electroless plated layer 21 includes copper and/or nickel, and the electroplated coating 22 includes one or more of copper, tin, silver, gold, and copper-zinc-tin alloy coatings. A thickness of the metal coating 20 may be set depending on an actual requirement. A thickness of the electroless plated layer 21 may be, for example, less than or equal to 1 µm. A thickness of the electroplated coating 22 may be, for example, within 5 µm to 25 µm. The electroplated coating 22 may be configured to transmit or reflect an electrical signal and can be soldered.

In this implementation of this application, a surface of one side that is of the antenna element body and that is bonded to the metal coating has a plurality of corrosion hole structures, and a metal coating material is deposited in the plurality of corrosion hole structures, so that strong riveting is formed between the antenna element body and the metal coating, and binding force is large.

In this implementation of this application, surface roughness Ra of the surface of one side that is of the antenna element body and that is bonded to the metal coating is less than 6 µm. In some implementations of this application, the surface roughness Ra of the surface of one side that is of the antenna element body and that is bonded to the metal coating is less than 4 µm. In some other implementations of this application, the surface roughness Ra of the surface of one side that is of the antenna element body and that is bonded to the metal coating is less than 3 µm. In a specific implementation of this application, the surface roughness Ra of the surface of one side that is of the antenna element body and that is bonded to the metal coating may be within 0.5 µm to 3 µm. Suitable surface roughness can make the antenna element obtain a low PIM effect, large binding force of the coating, and desirable mechanical properties simultaneously.

The antenna element provided in this embodiment of this application can meet a welding requirement, and binding strength between the metal coating and the antenna element body, namely, the binding force of the coating, is large. A cross-cut test for a 3M #600 tape can reach a grade 0. An average value of third-order PIM of the antenna element in this embodiment of this application at 700 MHz to 6 GHz is less than or equal to -100 dBm, and is applicable to an FDD antenna with a desirable PIM value.

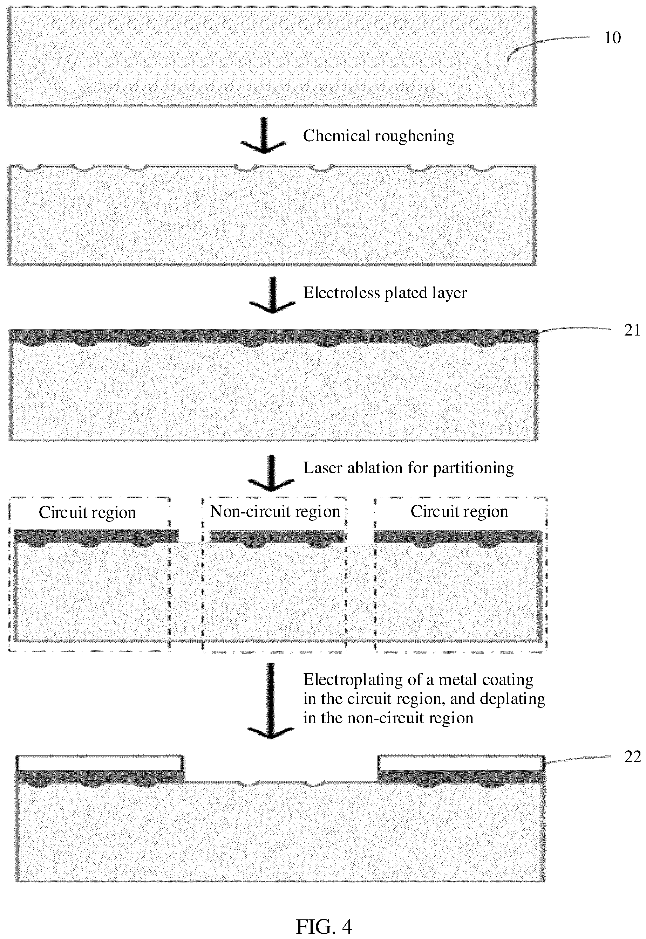

As shown in FIG. 4, a procedure for a fabrication process of the antenna element in this embodiment of this application may include the following steps:
S101: Perform injection molding. Plastic particles obtained through the foregoing extrusion and granulation in this embodiment of this application are integrally injection molded to obtain the antenna element body 10.
S102: Perform chemical roughening. The antenna element body 10 is roughened by using chemical corrosion solution, to form a roughened surface with surface roughness Ra less than 6 µm. The chemical corrosion solution may include acid corrosion solution and/or alkaline corrosion solution. It can be learned from FIG. 4 that some corrosion holes are formed on the surface of the antenna element body after chemical roughening.
S103: Form an electroless plated layer: The electroless plated layer 21 is deposited on the roughened surface by using an electroless plating method. It can be learned from FIG. 4 that, when the electroless plated layer 21 is deposited, part of a metallic material of the plated layer penetrates into the corrosion holes on the surface of the antenna element body, so that the electroless plated layer 21 is strongly bonded to the antenna element body.
S 104: Perform laser ablation for partitioning: Laser ablation is used to remove part of the electroless plated layer 21 to isolate a circuit region from a non-circuit region. In this process, laser ablation is used only for partitioning, and a processing amount of the laser ablation is greatly reduced compared with the LDS process.
S105: Perform electroplating to form the metal coating in the circuit region, and perform deplating in a non-circuit region. The electroplated coating 22 is formed on an electroless plated layer in the circuit region by using an electroplating method, and an electroless plated layer in the non-circuit region is removed, to obtain the antenna element.

An embodiment of this application further provides an antenna, including the foregoing antenna element in embodiments of this application. The antenna in this embodiment of this application may further include other different components based on an integration status of the antenna element, for example, may further include a reflection component, a radome, a phase shifter, a filter, and a heat sink. A design form and a structure of the antenna in this embodiment of this application are not limited. The antenna may be a single-column antenna or may be a multi-column antenna; may be a same-band multi-array antenna or may be a multi-band multi-array antenna; may be a high-frequency antenna or may be a multi-frequency antenna; or may be a base station antenna, a terminal device antenna, or the like. The antenna provided in this embodiment of this application may be used in any device that has an antenna function requirement, for example, a wireless communication device. Specifically, the antenna may be used, for example, in a terminal device or a base station.

An embodiment of this application further provides a terminal device. The terminal device includes the foregoing antenna in embodiments of this application. The terminal device includes but is not limited to a wireless communication terminal, for example, a mobile phone, a tablet computer, or a smart wearable device.

An embodiment of this application further provides a base station. The base station includes the foregoing antenna in embodiments of this application.

Compared with the existing LDS process, the plastic provided in this embodiment of this application does not need to be added with an expensive organometallic compound, and has lower costs of a raw material. In addition, the plastic can be chemically roughened, so that the surface roughness after roughening is lower, and evenness and stability of surface morphology are better. During laser processing, resin in the plastic can be prevented from being damaged, and carbonized particles generated are reduced. Not all circuit regions need to be activated by laser light, and only a narrow line width needs to be processed along an edge of a needed circuit, where the line width is generally less than 0.5 mm. A processing amount is small, and process costs of the laser processing are low. Compared with the existing PEP process, the plastic in this embodiment of this application can be chemically roughened, so that the surface roughness Ra after roughening is less than 6 µm, and the binding force of the coating is desirable with low roughness. Evenness and stability of the morphology are desirable after chemical roughening. When the laser processing is performed on the plated-layer coating and a plastic interface, a plastic substrate is not carbonized, burrs at an edge of the coating are small when the metal coating is formed through electroplating, and third-order PIM at 700 MHz to 6 GHz can be less than -110 dBm. This meets a requirement of the antenna element for PIM, and is applicable to an antenna in an FDD system and an antenna in a TDD system.

The following further describes technical solutions in embodiments of this application by using specific embodiments.

### Embodiment 1

This embodiment provides plastic, including the following components in parts by weight:
45 parts of liquid crystal polyester;
35 parts of titanium dioxide;
10 parts of silica microsphere; and
10 parts of flat glass fiber.

D50 of the silica microsphere is 5 µm. The flat glass fiber is an alkali-free glass fiber whose cross-sectional thickness is 7 µm.

The plastic in this embodiment uses the titanium dioxide. The titanium dioxide has strong reflectivity to laser light, and can significantly reduce or eliminate a carbonization effect on a plastic substrate caused by laser processing. In addition, due to a high dielectric constant and a low dielectric loss, titanium dioxide can be used as a dielectric modifier to obtain a high-dielectric and low-loss material. These components, namely, the liquid crystal polyester, the silica microsphere, and the flat glass fiber, are capable of being chemically etched. After the etching, a stable low roughness surface can be obtained, and a flat feature structure that has tiny holes is formed on the roughened surface, thereby increasing binding force between a coating on the surface of the plastic and a plastic interface. The material fabricated in this embodiment has characteristics of a high dielectric constant, a low dielectric loss, low costs, low PIM, and high strength, and can further improve isolation of the antenna element and implement miniaturization of the antenna element in the antenna.

Tensile strength of the plastic in this embodiment is 117 MPa. The plastic in this embodiment is injection molded into a plastic sheet; the plastic sheet is corroded by chemical corrosion solution to form a roughened surface with surface roughness Ra of 2.3 µm on a surface of the plastic sheet; and then ground plane metal and a microstrip are plated on the plastic sheet, to obtain a simplified microstrip transmission line sheet. A PIM value is tested by using the microstrip transmission line sheet, impedance of the microstrip transmission line is designed to be 50 ohms, two 43 dBm (20 W) carrier signals are input for testing, and a third-order PIM value is tested at a frequency band of 700 MHz to 6 GHz. An average value of the third-order PIM of the material at 700 MHz to 6 GHz is -115 dBm, a dielectric constant Dk is 6.0, and a dielectric loss Df is 0.0052. The binding force of the coating satisfies a grade 0 of a cross-cut test for a 3M #250 tape, and can satisfy SMT soldering.

### Embodiment 2

This embodiment provides plastic, including the following components in parts by weight:
61 parts of liquid crystal polyester;
6 parts of titanium dioxide;
23 parts of silica microsphere; and
10 parts of flat glass fiber.

D50 of the silica microsphere is 5 µm. The flat glass fiber is an alkali-free glass fiber whose cross-sectional thickness is 7 µm.

The material in this embodiment has characteristics of a low dielectric constant, a low dielectric loss, low costs, low PIM, and high strength.

Tensile strength of the plastic in this embodiment is 125 MPa. The plastic in this embodiment is injection molded into a plastic sheet; the plastic sheet is corroded by chemical corrosion solution to form a roughened surface with surface roughness Ra of 2.6 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -110 dBm, Dk is 4.0, and Df is 0.0032. Binding force of a coating satisfies a grade 0 of a cross-cut test for a 3M #250 tape, and can satisfy SMT soldering.

### Embodiment 3

This embodiment provides plastic, including the following components in parts by weight:
45 parts of liquid crystal polyester;
35 parts of titanium dioxide; and
20 parts of silica microsphere.

D50 of the silica microsphere is 5 µm.

The material in this embodiment has characteristics of a high dielectric constant, a low dielectric loss, low costs, low PIM, and high strength.

Tensile strength of the plastic in this embodiment is 118 MPa. The plastic in this embodiment is injection molded into a plastic sheet; the plastic sheet is corroded by chemical corrosion solution to form a roughened surface with surface roughness Ra of 2.5 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -102 dBm, Dk is 5.93, and Df is 0.0044. Binding force of a coating satisfies a grade 0 of a cross-cut test for a 3M #600 tape, and can satisfy SMT soldering.

### Embodiment 4

This embodiment provides plastic, including the following components in parts by weight:
49 parts of liquid crystal polyester;
31 parts of titanium dioxide; and
20 parts of flat glass fiber.

The flat glass fiber is an alkali-free glass fiber whose cross-sectional thickness is 7 µm.

The material fabricated in this embodiment has characteristics of a high dielectric constant, a low dielectric loss, low costs, low PIM, and high strength.

Tensile strength of the plastic in this embodiment is 132 MPa. The plastic in this embodiment is injection molded into a plastic sheet; the plastic sheet is corroded by chemical corrosion solution to form a roughened surface with surface roughness Ra of 2.4 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -107 dBm, Dk is 5.75, and Df is 0.0058. Binding force of a coating satisfies a grade 0 of a cross-cut test for a 3M #600 tape, and can satisfy SMT soldering.

### Embodiment 5

This embodiment provides plastic, including the following components in parts by weight:
44 parts of liquid crystal polyester;
5 parts of polyphenylene sulfide;
35 parts of titanium dioxide;
8 parts of silica microsphere; and
8 parts of flat glass fiber.

D50 of the silica microsphere is 5 µm. The flat glass fiber is an alkali-free glass fiber whose cross-sectional thickness is 7 µm.

The material fabricated in this embodiment has characteristics of a high dielectric constant, a low dielectric loss, low costs, low PIM, and high strength.

Tensile strength of the plastic in this embodiment is 90 MPa. The plastic in this embodiment is injection molded into a plastic sheet; the plastic sheet is corroded by chemical corrosion solution to form a roughened surface with surface roughness Ra of 3.2 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -108 dBm, Dk is 5.86, and Df is 0.0042. Binding force of a coating satisfies a grade 0 of a cross-cut test for a 3M #250 tape, and can satisfy SMT soldering.

### Embodiment 6

This embodiment provides plastic, including the following components in parts by weight:
38 parts of liquid crystal polyester;
5 parts of poly(1,4-cyclohexylenedimethylene terephthalate);
37 parts of titanium dioxide;
10 parts of silica microsphere; and
10 parts of flat glass fiber.

D50 of the silica microsphere is 5 µm. The flat glass fiber is an alkali-free glass fiber whose cross-sectional thickness is 7 µm.

The material fabricated in this embodiment has characteristics of a high dielectric constant, a low dielectric loss, low costs, low PIM, and high strength. Tensile strength of the plastic in this embodiment is 90 MPa. The plastic in this embodiment is injection molded into a plastic sheet; the plastic sheet is corroded by chemical corrosion solution to form a roughened surface with surface roughness Ra of 2.1 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -108 dBm, Dk is 5.83, and Df is 0.0046. Binding force of a coating satisfies a grade 0 of a cross-cut test for a 3M #250 tape, and can satisfy SMT soldering.

### Embodiment 7

This embodiment provides plastic, including the following components in parts by weight:
45 parts of liquid crystal polyester;
35 parts of calcium titanate;
10 parts of silica microsphere; and
10 parts of flat glass fiber.

D50 of the silica microsphere is 5 µm. The flat glass fiber is an alkali-free glass fiber whose cross-sectional thickness is 7 µm.

The calcium titanate used in this embodiment has strong reflectivity to laser light, and can significantly reduce or eliminate a carbonization effect on a plastic substrate caused by laser processing. These components, namely, the liquid crystal polyester, the silica microsphere, and the alkali-free flat glass fiber, are capable of being chemically etched. After the etching, a stable low roughness surface can be obtained, and a flat feature structure that has tiny holes is formed on the roughened surface, thereby increasing binding force between a coating and a plastic interface. The material fabricated in this embodiment has characteristics of a high dielectric constant, a low dielectric loss, low costs, low PIM, and high strength. Tensile strength of the plastic in this embodiment is 125 MPa. The plastic in this embodiment is injection molded into a plastic sheet; the plastic sheet is corroded by chemical corrosion solution to form a roughened surface with surface roughness Ra of 1.6 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -103 dBm, Dk is 6.3, and Df is 0.0055. Binding force of a coating satisfies a grade 0 of a cross-cut test for a 3M #250 tape, and can satisfy SMT soldering.

### Embodiment 8

This embodiment provides plastic, including the following components in parts by weight:
75 parts of liquid crystal polyester;
5 parts of calcium titanate;
10 parts of silica microsphere; and
10 parts of flat glass fiber.

D50 of the silica microsphere is 5 µm. The flat glass fiber is an alkali-free glass fiber whose cross-sectional thickness is 7 µm.

The material fabricated in this embodiment has characteristics of a low dielectric constant, a low dielectric loss, low costs, low PIM, and high strength. Tensile strength of the plastic in this embodiment is 142 MPa. The plastic in this embodiment is injection molded into a plastic sheet; the plastic sheet is corroded by chemical corrosion solution to form a roughened surface with surface roughness Ra of 1.6 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -110 dBm, Dk is 3.9, and Df is 0.0041. Binding force of a coating satisfies a grade 0 of a cross-cut test for a 3M #250 tape, and can satisfy SMT soldering.

### Embodiment 9

This embodiment provides plastic, including the following components in parts by weight:
57 parts of liquid crystal polyester;
6 parts of titanium dioxide;
7 parts of mica;
20 parts of silica microsphere; and
10 parts of flat glass fiber.

D50 of the silica microsphere is 5 µm. The flat glass fiber is an alkali-free glass fiber whose cross-sectional thickness is 7 µm.

The titanium dioxide and the mica powder that are used in this embodiment have strong reflectivity to laser light, and can significantly reduce or eliminate a carbonization effect on a plastic substrate caused by laser processing. These components, namely, the liquid crystal polyester, the silica microsphere, and the alkali-free flat glass fiber, are capable of being chemically etched. After the plastic is etched, a stable low roughness surface can be obtained, and a flat feature structure that has tiny holes is formed on the roughened surface, thereby increasing binding force between a coating and a plastic interface. In addition, a flake structure of the mica can improve mechanical strength. The material fabricated in this embodiment has characteristics of a low dielectric constant, a low dielectric loss, low costs, low PIM, and high strength. Tensile strength of the plastic in this embodiment is 98 MPa. The plastic in this embodiment is injection molded into a plastic sheet; the plastic sheet is corroded by chemical corrosion solution to form a roughened surface with surface roughness Ra of 2.5 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -108 dBm, Dk is 3.98, and Df is 0.0032. Binding force of a coating satisfies a grade 0 of a cross-cut test for a 3M #250 tape, and can satisfy SMT soldering.

### Embodiment 10

This embodiment provides plastic, including the following components in parts by weight:
30 parts of polyphenylene sulfide;
10 parts of liquid crystal polyester;
30 parts of titanium dioxide;
20 parts of silica microsphere; and
10 parts of flat glass fiber.

D50 of the silica microsphere is 5 µm. The flat glass fiber is an alkali-free glass fiber whose cross-sectional thickness is 7 µm.

The material fabricated in this embodiment has characteristics of a high dielectric constant, a low dielectric loss, low costs, low PIM, and high strength. Tensile strength of the plastic in this embodiment is 89 MPa. The plastic in this embodiment is injection molded into a plastic sheet; the plastic sheet is corroded by chemical corrosion solution to form a roughened surface with surface roughness Ra of 0.6 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -100 dBm, Dk is 5.63, and Df is 0.0027. Binding force of a coating satisfies a grade 0 of a cross-cut test for a 3M #600 tape, and can satisfy soldering-iron welding within 260°C.

### Embodiment 11

This embodiment provides plastic, including the following components in parts by weight:
40 parts of polyphenylene sulfide;
10 parts of polyphenylene oxide;
10 parts of titanium dioxide;
30 parts of silica microsphere; and
10 parts of flat glass fiber.

D50 of the silica microsphere is 5 µm. The flat glass fiber is an alkali-free glass fiber whose cross-sectional thickness is 7 µm.

The titanium dioxide used has strong reflectivity to laser light, and can significantly reduce or eliminate a carbonization effect on a plastic substrate caused by laser processing. These components, namely, the polyphenylene oxide, the silica microsphere, and the alkali-free flat glass fiber, are capable of being chemically etched. After the etching, a stable low roughness surface can be obtained, and a flat feature structure that has tiny holes is formed on the roughened surface, thereby increasing binding force between a coating and a plastic interface. The material fabricated in this embodiment has characteristics of a low dielectric constant, a low dielectric loss, low costs, low PIM, and high strength. Tensile strength of the plastic in this embodiment is 105 MPa. The plastic in this embodiment is injection molded into a plastic sheet; the plastic sheet is corroded by chemical corrosion solution to form a roughened surface with surface roughness Ra of 0.6 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -101 dBm, Dk is 4.1, and Df is 0.003. Binding force of a coating satisfies a grade 0 of a cross-cut test for a 3M #600 tape, and can satisfy soldering-iron welding within 200°C.

### Embodiment 12

This embodiment provides plastic, including the following components in parts by weight:
35 parts of polyphenylene sulfide;
5 parts of titanium dioxide; and
60 parts of silica microsphere.

D50 of the silica microsphere is 5 µm.

The titanium dioxide used has strong reflectivity to laser light, and can significantly reduce or eliminate a carbonization effect on a plastic substrate caused by laser processing. The component, namely, the silica microsphere capable of being chemically etched, is used. After the etching, a stable low roughness surface can be obtained, and a feature structure that has tiny holes is formed on the roughened surface, thereby increasing binding force between a coating and a plastic interface. The material fabricated in this embodiment has a low dielectric constant, a low dielectric loss, low costs, and low PIM. Tensile strength of the plastic in this embodiment is 45 MPa. The plastic in this embodiment is injection molded into a plastic sheet; the plastic sheet is corroded by chemical corrosion solution to form a roughened surface with surface roughness Ra of 0.5 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -112 dBm, Dk is 3.85, and Df is 0.0032. Binding force of a coating satisfies a grade 0 of a cross-cut test for a 3M #600 tape, and can satisfy soldering-iron welding within 260°C.

### Embodiment 13

This embodiment provides plastic, including the following components in parts by weight:
54 parts of polyphenylene oxide;
10 parts of liquid crystal polyester;
6 parts of titanium dioxide;
20 parts of silica microsphere; and
10 parts of flat glass fiber.

D50 of the silica microsphere is 5 µm. The flat glass fiber is an alkali-free glass fiber whose cross-sectional thickness is 7 µm.

The titanium dioxide used has strong reflectivity to laser light, and can significantly reduce or eliminate a carbonization effect on a plastic substrate caused by laser processing. The components, namely, the liquid crystal polyester, and the silica microsphere and the flat glass fiber that are capable of being chemically etched, are used. After the etching, a stable low roughness surface can be obtained, and a feature structure that has tiny holes is formed on the roughened surface, thereby increasing binding force between a coating and a plastic interface. The material in this embodiment has characteristics of a low dielectric constant, a lower dielectric loss, low costs, and low PIM. Tensile strength of the plastic in this embodiment is 70 MPa. The plastic in this embodiment is injection molded into a plastic sheet; the plastic sheet is corroded by chemical corrosion solution to form a roughened surface with surface roughness Ra of 1 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -110 dBm, Dk is 3.88, and Df is 0.0015. Binding force of a coating satisfies a grade 0 of a cross-cut test for a 3M #250 tape, and can satisfy soldering-iron welding within 200°C.

### Embodiment 14

This embodiment provides plastic, including the following components in parts by weight:
69 parts of liquid crystal polyester;
5 parts of ethylene-butyl acrylate-glycidyl methacrylate copolymer;
6 parts of titanium dioxide;
10 parts of silica microsphere; and
10 parts of flat glass fiber.

D50 of the silica microsphere is 5 µm. The flat glass fiber is an alkali-free glass fiber whose cross-sectional thickness is 7 µm.

The titanium dioxide used has strong reflectivity to laser light, and can significantly reduce or eliminate a carbonization effect on a plastic substrate caused by laser processing. The components, namely, the liquid crystal polyester and the ethylene-butyl acrylate-glycidyl methacrylate copolymer, and the silica microsphere and the flat glass fiber that are capable of being chemically etched, are used. After the etching, a stable low roughness surface can be obtained, and a feature structure that has tiny holes is formed on the roughened surface, thereby increasing binding force between a coating and a plastic interface. The material fabricated in this embodiment has characteristics of a low dielectric constant, a low dielectric loss, low costs, and low PIM. Tensile strength of the plastic in this embodiment is 120 MPa. The plastic in this embodiment is injection molded into a plastic sheet; the plastic sheet is corroded by chemical corrosion solution to form a roughened surface with surface roughness Ra of 2 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is - 112 dBm, Dk is 3.95, and Df is 0.0055. Binding force of a coating satisfies a grade 0 of a cross-cut test for a 3M #250 tape, and can satisfy SMT soldering.

### Embodiment 15

This embodiment provides plastic, including the following components in parts by weight:
69 parts of liquid crystal polyester;
5 parts of ethylene propylene diene monomer rubber;
6 parts of titanium dioxide;
10 parts of silica microsphere; and
10 parts of flat glass fiber.

D50 of the silica microsphere is 5 µm. The flat glass fiber is an alkali-free glass fiber whose cross-sectional thickness is 7 µm.

The titanium dioxide used has strong reflectivity to laser light, and can significantly reduce or eliminate a carbonization effect on a plastic substrate caused by laser processing. The components, namely, the liquid crystal polyester and the ethylene propylene diene monomer rubber, and the silica microsphere and the flat glass fiber that are capable of being chemically etched, are used. After the etching, a stable low roughness surface can be obtained, and a feature structure that has tiny holes is formed on the roughened surface, thereby increasing binding force between a coating and a plastic interface. The material fabricated in this embodiment has characteristics of a low dielectric constant, a low dielectric loss, low costs, and low PIM. Tensile strength of the plastic in this embodiment is 115 MPa. The plastic in this embodiment is injection molded into a plastic sheet; the plastic sheet is corroded by chemical corrosion solution to form a roughened surface with surface roughness Ra of 2.5 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -114 dBm, Dk is 3.9, and Df is 0.0018. Binding force of a coating satisfies a grade 0 of a cross-cut test for a 3M #250 tape, and can satisfy SMT soldering.

### Embodiment 16

This embodiment provides plastic, including the following components in parts by weight:
69 parts of polyether ether ketone;
5 parts of liquid crystal polyester;
6 parts of titanium dioxide;
10 parts of silica microsphere; and
10 parts of flat glass fiber.

D50 of the silica microsphere is 5 µm. The flat glass fiber is an alkali-free glass fiber whose cross-sectional thickness is 7 µm.

The titanium dioxide used has strong reflectivity to laser light, and can significantly reduce or eliminate a carbonization effect on a plastic substrate caused by laser processing. The components, namely, the liquid crystal polyester, and the silica microsphere and the flat glass fiber that are capable of being chemically etched, are used. After the etching, a stable low roughness surface can be obtained, and a feature structure that has tiny holes is formed on the roughened surface, thereby increasing binding force between a coating and a plastic interface. The material fabricated in this embodiment has a low dielectric constant, a low dielectric loss, low costs, and low PIM. Tensile strength of the plastic in this embodiment is 110 MPa. The plastic in this embodiment is injection molded into a plastic sheet; the plastic sheet is corroded by chemical corrosion solution to form a roughened surface with surface roughness Ra of 1.9 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -113 dBm, Dk is 4.05, and Df is 0.0035. Binding force of a coating satisfies a grade 0 of a cross-cut test for a 3M #250 tape, and can satisfy SMT soldering.

### Embodiment 17

This embodiment provides plastic, including the following components in parts by weight:
43 parts of liquid crystal polyester;
10 parts of methyl methacrylate-butadiene-styrene copolymer; and
47 parts of titanium dioxide.

The titanium dioxide used has strong reflectivity to laser light, and can significantly reduce or eliminate a carbonization effect on a plastic substrate caused by laser processing. The components, namely, the liquid crystal polyester, and the methyl methacrylate-butadiene-styrene copolymer that is capable of being chemically etched, are used. After the etching, a stable low roughness surface can be obtained, and a feature structure that has tiny holes is formed on the roughened surface, thereby increasing binding force between a coating and a plastic interface. The material fabricated in this embodiment has a high dielectric constant, a low dielectric loss, low costs, and low PIM. Tensile strength of the plastic in this embodiment is 83 MPa. The plastic in this embodiment is injection molded into a plastic sheet; the plastic sheet is corroded by chemical corrosion solution to form a roughened surface with surface roughness Ra of 1.5 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -112 dBm, Dk is 6.0, and Df is 0.014. Binding force of a coating satisfies a grade 0 of a cross-cut test for a 3M #250 tape, and can satisfy soldering-iron welding within 200°C.

Compared with the existing LDS process, the plastic material in the foregoing embodiments of this application that is used for fabricating an antenna element does not include an LDS organometallic compound, has low material costs, has no carbonized particles caused by LDS activation, and has lower roughness and a better PIM value. In comparison with the existing PEP process, for the plastic material, carbonized particles caused by laser processing can be reduced or eliminated, a surface with low roughness and desirable evenness of morphology can be obtained through chemical roughening, the binding force of the metal coating with low roughness can be achieved, and the PIM is better.

### Embodiment 18

This embodiment provides plastic, including the following components in parts by weight:
69 parts of liquid crystal polyester;
5 parts of ethylene propylene diene monomer rubber; and
26 parts of titanium dioxide.

The titanium dioxide used has strong reflectivity to laser light, and can significantly reduce or eliminate a carbonization effect on a plastic substrate caused by laser processing. The components, namely, the liquid crystal polyester and the ethylene propylene diene monomer rubber that is capable of being corroded, are used. After the etching, a stable low roughness surface can be obtained, and a feature structure that has tiny holes is formed on the roughened surface, thereby increasing binding force between a coating and a plastic interface. The material fabricated in this embodiment has characteristics of a low dielectric constant, a low dielectric loss, low costs, and low PIM. Tensile strength of the plastic in this embodiment is 105 MPa. The plastic in this embodiment is injection molded into a plastic sheet; the plastic sheet is corroded by chemical corrosion solution to form a roughened surface with surface roughness Ra of 1.4 µm on a surface of the plastic sheet; and then ground plane metal and a microstrip are plated on the plastic sheet, to obtain a simplified microstrip transmission line sheet. A same method as that in Embodiment 1 is used for testing. An average value of third-order PIM of the material in this embodiment at 700 MHz to 6 GHz is -114 dBm, Dk is 5.8, and Df is 0.0042. Binding force of a coating satisfies a grade 0 of a cross-cut test for a 3M #250 tape, and can satisfy SMT soldering.

Compared with the existing LDS process, the plastic material in the foregoing embodiments of this application that is used for fabricating an antenna element does not include an LDS organometallic compound, has low material costs, has no carbonized particles caused by LDS activation, and has lower roughness and a better PIM value. In comparison with the existing PEP process, for the plastic material, carbonized particles caused by laser processing can be reduced or eliminated, a surface with low roughness and desirable evenness of morphology can be obtained through chemical roughening, the binding force of the metal coating with low roughness can be achieved, and the PIM is better.

## Claims

1. Plastic, wherein with a total of 100 parts by weight, the plastic comprises the following components in parts by weight:
25 to 90 parts of matrix resin;
1 to 60 parts of laser reflecting agent; and
0 to 70 parts of inorganic filler, wherein the inorganic filler is capable of being chemically corroded; and when the matrix resin comprises a resin component capable of being chemically corroded, parts by weight of the inorganic filler are greater than or equal to 0 parts; or when the matrix resin is fully a resin component incapable of being chemically corroded, parts by weight of the inorganic filler are greater than 0 parts.

2. The plastic according to claim 1, wherein the matrix resin comprises first matrix resin, and the first matrix resin comprises one or more of thermotropic liquid crystal polyester, polyphenylene sulfide, polyphenylene oxide, polyethylene terephthalate, polybutylene terephthalate, poly(1,4-cyclohexylenedimethylene terephthalate), polyamide resin, polysulfone resin, polyketone resin, and polyetherimide.

3. The plastic according to claim 2, wherein parts by weight of the first matrix resin are 25 to 90 parts.

4. The plastic according to claim 2 or 3, wherein the matrix resin further comprises second matrix resin; the second matrix resin comprises one or more of thermotropic liquid crystal polyester, polyphenylene oxide, poly(1,4-cyclohexylenedimethylene terephthalate), polyethylene terephthalate, polybutylene terephthalate, polyamide resin, an acrylonitrile-butadiene-styrene copolymer, a methyl methacrylate-butadiene-styrene copolymer, ABS high rubber powder, a methyl methacrylate-butadiene copolymer, an acrylate copolymer, an ethylene-butyl acrylate-glycidyl methacrylate copolymer, an ethylene-methyl acrylate-glycidyl methacrylate copolymer, polybutadiene, a butadiene-styrene copolymer, a hydrogenated styrene-butadiene-styrene copolymer, a styrene-butadiene-styrene copolymer, a butadiene-acrylonitrile copolymer, butyl rubber, polysoprene rubber, an ethylene-octene copolymer, and ethylene propylene diene monomer rubber, and the second matrix resin is different from the first matrix resin.

5. The plastic according to claim 4, wherein parts by weight of the second matrix resin are 1 to 25 parts.

6. The plastic according to any one of claims 1 to 5, wherein when the parts by weight of the inorganic filler are equal to 0 parts, the matrix resin comprises two or more resin components capable of being chemically corroded.

7. The plastic according to any one of claims 1 to 6, wherein when the parts by weight of the inorganic filler are equal to 0 parts, the matrix resin comprises a resin component with at least 10 parts by weight capable of being chemically corroded.

8. The plastic according to claim 1, wherein the laser reflecting agent comprises one or more of titanium dioxide powder, zinc oxide powder, zinc sulfide powder, calcium titanate powder, barium sulfate powder, iron oxide powder, talcum powder, mica powder, and ABO₃ powder, and in the ABO₃ powder, A is Ba, Sr, Pb, or BaₓSr_{y}, and B is Ti, Zr, or TiₓZr_{y}, wherein x+y=1.

9. The plastic according to claim 1, wherein the inorganic filler comprises one or more of a silica particle and a glass fiber.

10. The plastic according to claim 9, wherein a D50 particle size of the silica particle is within 1 µm to 5 µm.

11. The plastic according to claim 9, wherein a cross-sectional diameter or thickness of the glass fiber is less than or equal to 15 µm.

12. The plastic according to claim 9, wherein a content of silica in the glass fiber is greater than or equal to 50%.

13. The plastic according to any one of claims 1 to 12, wherein the plastic does not comprise a component capable of being activated by laser light to release metal particles.

14. The plastic according to any one of claims 1 to 13, wherein the plastic further comprises a dielectric modifier, and the dielectric modifier comprises one or more of titanium dioxide, barium titanate, calcium titanate, strontium titanate, barium strontium titanate, lead titanate, lead zirconate, lead zirconate titanate, potassium tantalate niobate, and zinc oxide.

15. The plastic according to claim 14, wherein parts by weight of the dielectric modifier are less than or equal to 40 parts.

16. The plastic according to any one of claims 1 to 15, wherein the plastic further comprises one or more of a lubricant, a compatibilizer, a flame retardant, and an antimicrobial agent.

17. The plastic according to any one of claims 1 to 16, wherein a long-term tolerance operating temperature of the plastic is greater than 110°C, and tensile strength of the plastic is greater than or equal to 40 MPa.

18. The plastic according to any one of claims 1 to 17, wherein a dielectric loss of the plastic at 700 MHz to 6 GHz is less than 0.015.

19. The plastic according to any one of claims 1 to 18, wherein an average value of third-order PIM of an antenna element fabricated by using the plastic at 700 MHz to 6 GHz is less than or equal to -100 dBm.

20. A plastic part having a metal coating, comprising a plastic part body and a metal coating formed on a surface of the plastic part body, wherein the plastic part body is obtained by performing injection molding on the plastic according to any one of claims 1 to 19.

21. An antenna element, wherein the antenna element comprises an antenna element body and a metal coating formed on a surface of the antenna element body, and the antenna element body is obtained by performing injection molding on the plastic according to any one of claims 1 to 19.

22. The antenna element according to claim 21, wherein the metal coating comprises an electroless plated layer and an electroplated coating that are sequentially formed on the surface of the antenna element body, the electroless plated layer comprises copper and/or nickel, and the electroplated coating comprises one or more of copper, tin, silver, gold, and copper-zinc-tin alloy.

23. The antenna element according to claim 21 or 22, wherein a surface of one side that is of the antenna element body and that is bonded to the metal coating has a plurality of corrosion hole structures, and a metal coating material is deposited in the plurality of corrosion hole structures.

24. The antenna element according to any one of claims 21 to 23, wherein surface roughness Ra of the surface of one side that is of the antenna element body and that is bonded to the metal coating is less than 6 µm.

25. The antenna element according to any one of claims 21 to 24, wherein a cross-cut test is used for the metal coating, and binding force is at least a grade 0 for a 3M #600 tape.

26. The antenna element according to any one of claims 21 to 25, wherein an average value of third-order PIM of the antenna element at 700 MHz to 6 GHz is less than or equal to -100 dBm.

27. An antenna, comprising the antenna element according to any one of claims 21 to 26.

28. A terminal device, wherein the terminal device comprises the antenna according to claim 27.

29. A base station, wherein the base station comprises the antenna according to claim 27.
